# EUROPÄISCHE PATENTANMELDUNG

(11) **EP 1 674 365 A1**
(43) Veröffentlichungstag der Anmeldung: **28.06.2006**
(21) Anmeldenummer: 05109886.1
(22) Anmeldetag: 24.10.2005
(51) Int. Cl.: B60T 8/40, B60T 8/88, B60T 17/22, F04B 49/06, F04B 51/00

(54) **Überwachung einer Mehrkolbenpumpe**

(30) Priorität: 23.12.2004 DE 102004062029
(71) Anmelder: ROBERT BOSCH GMBH, 70442 Stuttgart (DE)
(72) Erfinder: Sussek, Ullrich, 71720, Oberstenfeld (DE)

(57) **Zusammenfassung**

Die Erfindung beschreibt ein Verfahren und eine Vorrichtung zur Überwachung einer Mehrkolbenpumpe, insbesondere in einer Bremsenanlage eines Fahrzeugs. Dabei ist vorgesehen, dass zur Überwachung der von der Mehrkolbenpumpe erzeugte Druck erfasst wird. Der Kern der Erfindung besteht darin, dass ein Defekt der Mehrkolbenpumpe erkannt wird, indem der zeitliche Druckverlauf erfasst und mittels einer Frequenzanalyse analysiert wird.

Somit kann mittels der Erfindung eine rechtzeitige Erkennung eines sich anbahnenden hydraulischen Pumpendefekts erreicht werden, z.B. der Ausfall eines Kolbens der Mehrkolbenpumpe.

## Beschreibung

### Stand der Technik

Die Erfindung geht aus von einem Verfahren und einer Vorrichtung zur Überwachung einer Mehrkolbenpumpe, insbesondere in einer Bremsanlage eines Fahrzeugs, nach den Oberbegriffen der unabhängigen Ansprüche.

Bei konventionellen Bremsanlagen sind üblicherweise einfache Kolbenpumpe für die Ladung des Speichers in Verwendung. Die Pumpenleistung wird dabei mittels der Erfassung des Speicherladegradienten in einem bestimmten Druckbereich überwacht. Da es aufgrund der Fördercharakteristika der Kolbenpumpe und der Druckweiterleitung im hydraulischen System der Bremsanlage zu Druckschwankungen kommen kann, kann es bei Bremssituationen, beispielsweise im ABS- oder ASR-Fall, zu ungewollten Klopfgeräuschen oder einer Verzögerung des Druckaufbaus kommen. Mit der Verwendung einer Mehrkolbenpumpe können diese Druckschwankungen in der Bremsanlage bzw. in den Bremskreisen verhindert werden. Da jedoch bei der Verwendung von Mehrkolbenpumpen in Rückfördersystemen keine gut definierten Betriebszustände vorhanden sind, ist eine hydraulische Überwachung der Pumpenleistung nur schwer durchführbar. Darüber hinaus ist zu beachten, dass die Förderleistung der einzelnen Pumpenelemente in einer Mehrfachkolbenpumpe eine hohe Streuung aufweisen können. So kann beispielsweise eine gute Mehrkolbenpumpe mit einem defekten Element die gleiche Förderleistung liefern, wie eine schlechte Mehrkolbenpumpe mit drei funktionierenden Pumpenelementen. Eine derartige Streuung bei der Förderleistung der einzelnen Pumpenelemente wirkt sich erschwerend auf die Überwachung des Druckgradienten aus. Darüber hinaus gibt es Überwachungen für den aktiven Druckaufbau, die aber den Ausfall eines Pumpenelements bei Mehrkolbenpumpen nicht erkennen können.

Bekannt ist, die Fast Fourier-Transformation (FFT) zur Analyse von Schwingungen zu verwenden. So wird beispielsweise in der WO-1995030134 A1 eine Fast Fourier-Transformation zur Überwachung von Turbinenrädern gezeigt. Die Überwachung in dieser Schrift wird dabei durch die Verwendung eines akustischen Sensors, der in dem Gehäuse der Turbine untergebracht ist, bewerkstelligt. Das so erfasste akustische Signal wird im Folgenden aufbereitet, so dass die charakteristische Dopplerwelle für die Bewegung der Turbinenräder von den Umgebungsgeräuschen separiert werden kann.

Aus der DE 190 64 756 A1 ist ein Verfahren zur Verarbeitung von Geräuschsignalen einer Geräuschquelle mittels einer Schallanalyse anhand von Signalmerkmalen und der Geräuschquelle zugrunde liegenden Parameter bekannt. Unter Verwendung geeigneter Messsensoren und einer schnellen Signalverarbeitung kann so eine Überwachung von laufenden Maschinenanlagen, wie Motoren oder Turbinen durchgeführt werden. So kann anhand der Schallanalyse ein Hinweis auf eventuelle Betriebsstörungen gewonnen werden. Zweckmäßigerweise wird die Schallanalyse anhand einer Zeitfrequenz und/oder Pegelanalyse ausgeführt. Dazu wird beispielsweise für ein das jeweilige Geräuschsignal charakterisierende Schallspektrum die Abhängigkeit des Schalldruckpegels von der Frequenz mittels einer Frequenzanalyse, z.B. einer Fast Fourier-Transformation (kurz FFT genannt), ermittelt. Anhand der Fast Fourier-Transformation können bevorzugt Abtastrate, Blocklänge oder Intervall des zugrunde liegenden Schall- oder Geräuschsignals ermittelt werden. Typischerweise wird die Schallanalyse bei Überschreiten eines Geräuschgrenzwerts ausgeführt. Weiterhin wird zweckmäßigerweise mindestens eines der Signalmerkmale des Geräuschsignals in Form eines Geräuschmusters hinterlegt. Dies kann beispielsweise das Frequenzspektrum oder das Pegelspektrum von wiederholt auftretenden Geräuschsignalen für eine spätere Identifizierung bzw. Identifikation von gleichen zukünftigen Geräuschsignalen in Form von Mustern sein, die in einem Speicher hinterlegt werden. Für eine besonders schnelle Identifizierung und/oder Klassifizierung der Geräuschsignale und somit der Geräuschquelle wird mindestens eines der Signalmerkmale des Geräuschsignals mit gespeicherten Geräuschmustern verglichen.

### Vorteile der Erfindung

Die Erfindung beschreibt ein Verfahren und eine Vorrichtung zur Überwachung einer Mehrkolbenpumpe, insbesondere in einer Bremsenanlage eines Fahrzeugs. Dabei ist vorgesehen, dass zur Überwachung der von der Mehrkolbenpumpe erzeugte Druck erfasst wird. Der Kern der Erfindung besteht darin, dass ein Defekt der Mehrkolbenpumpe erkannt wird, indem der zeitliche Druckverlauf erfasst und mittels einer Frequenzanalyse analysiert wird.

Somit kann mittels der Erfindung eine rechtzeitige Erkennung eines sich anbahnenden hydraulischen Pumpendefekts erreicht werden.

In einer Ausgestaltung der Erfindung wird die Frequenzanalyse mittels einer Fast Fourier-Transformation durchgeführt.

Vorteilhafterweise kann durch die Frequenzanalyse der Ausfall eines Kolbens der Mehrkolbenpumpe erkannt werden.

In einer weiteren Ausgestaltung der Erfindung wird für die Frequenzanalyse ein zeitlicher Mittelwert des Druckverlaufs verwendet.

Vorteilhafterweise wird der zeitliche Verlauf des von der Mehrkolbenpumpe erzeugten Drucks mittels diskreter Druckgrößen erfasst. In einer besonderen Ausgestaltung der Erfindung ist dabei vorgesehen, dass die diskreten Druckgrößen mittels eines Druckerfassungsmittels, beispielsweise mittels eines Drucksensors, erfasst werden.

Durch den Einsatz einer Mehrkolbenpumpe in der Bremsenanlage eines Fahrzeugs kann außer einer Komfortverbesserung auch eine Erhöhung der Redundanz hinsichtlich des Druckaufbaus erreicht werden. So kann verhindert werden, dass bei Ausfall eines Pumpenelements ein Funktionsversagen der Bremsanlage erfolgt. Erst wenn mehrere Pumpenelemente ausfallen, kann es zu einem kritischen Zustand beim Druckaufbau während einer Bremssituation kommen. So sind Fahrsituationen denkbar, in denen durch den Ausfall von Pumpenelementen unkritische Komfortfunktionen durch die Pumpenleistung noch bedient werden können, während es bei kritischen Anwendungen, wie z.B. einem ABS-Fall, zu einem Funktionsversagen kommt. Mittels der vorliegenden Erfindung ist somit eine rechtzeitige Erkennung eines sich anbahnenden hydraulischen Pumpendefekts unter Verwendung bestehender Redundanz möglich.

### Zeichnung

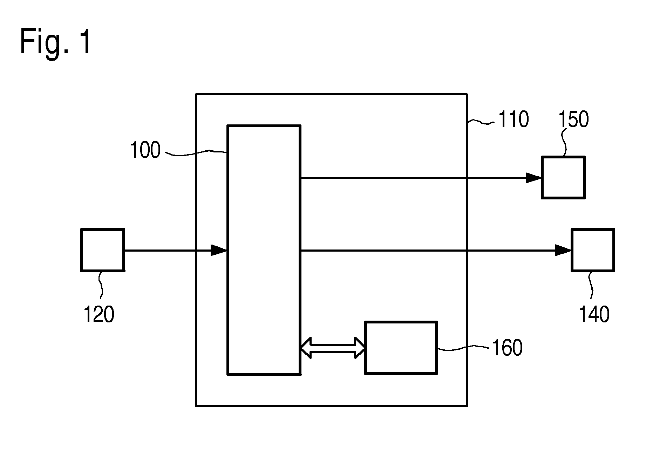

Figur 1 zeigt schematisch ein Steuergerät, in dem die Überwachung der Mehrkolbenpumpe durchgeführt wird.

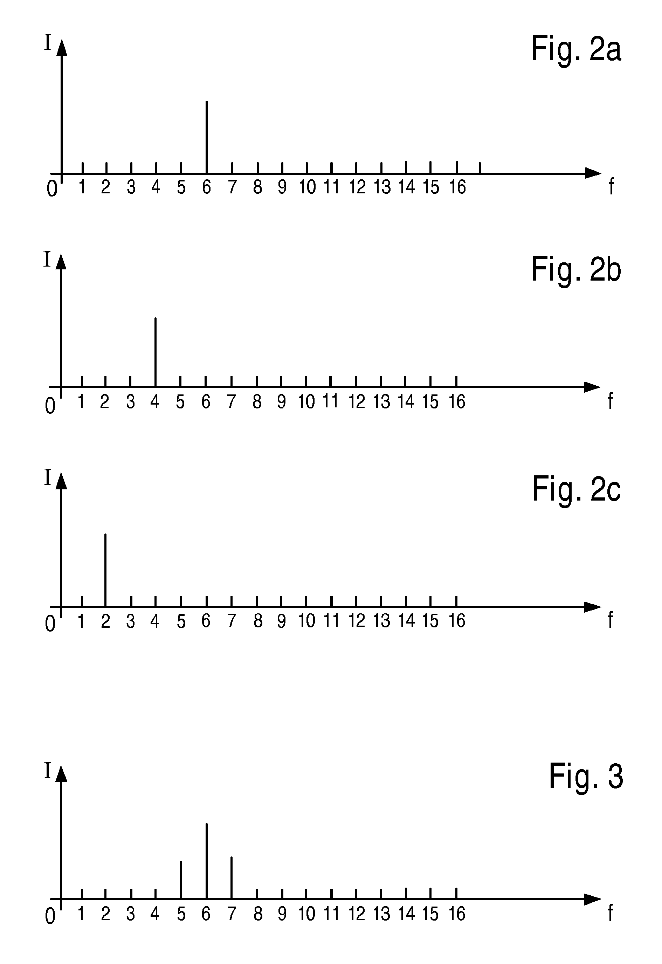

In den Diagrammen der Figuren 2 und 3 sind beispielhafte Ergebnisse von Frequenzanalysen dargestellt.

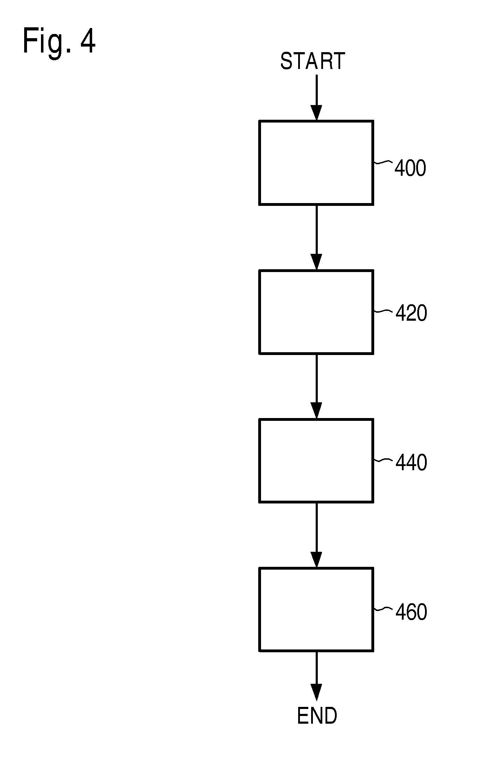

Im Flussdiagramm der Figur 4 ist ein schematisches Ablaufdiagramm eines Algorithmus zur Erkennung eines Defekts einer Mehrkolbenpumpe aufgezeigt.

### Ausführungsbeispiel

In Figur 1 ist schematisch die erfindungsgemäße Überwachung einer Mehrkolbenpumpe in der Bremsenanlage eines Fahrzeugs dargestellt. Dabei kann vorgesehen sein, dass in der Bremsanlage mit zwei Bremskreisen eine 6-Kolbenpumpe zum aktiven Druckaufbau eingesetzt wird. Die Kolbenpumpe kann dabei so eingesetzt werden, dass jedem Bremskreis drei Pumpenelemente zugeordnet sind. Zur Überwachung des von der 6-Kolbenpumpe erzeugten Druckaufbaus ist wenigstens ein Drucksensor 120 vorgesehen. Darüber hinaus kann jedoch auch jedem Bremskreis ein Drucksensor zugeordnet sein, so dass der Druckverlauf in beiden Bremskreisen überwacht werden kann. Mit Hilfe dieses Drucksensors 120 kann somit die Überwachungsvorrichtung 100 Druckgrößen des Pumpenausgangs bzw. jedes Bremskreises einlesen. Das Erfassen der Druckgröße mittels des Drucksensors 120 und/oder das Einlesen der Druckgrößen in die Überwachungsvorrichtung 100 kann sowohl kontinuierlich als auch zeitlich diskret erfolgen. Mittels der so erfassten Druckgrößen kann ein zeitlicher Verlauf des von der 6-Kolbenpumpe erzeugten Drucks ermittelt werden. Dieser zeitliche Verlauf kann in einem Speicher 160 zwischengespeichert werden. Ausgehend von dem zeitlichen Druckverlauf können die Messwerte mittels eines Fast Fourier-Transformationsalgorithmus in den Frequenzbereich transformiert werden. Aufgrund der Druckpulsationen der Mehrkolbenpumpe muss die FFT einen Ausschlag in der n-ten-Oberwelle der Pumpendrehzahl liefern. Bei Ausfall eines Kolbenelements kommt es demzufolge zum Ausschlag bei der (n-1)'ten Oberwelle. Wird ein Ausfall eines Pumpenelements erkannt, so kann eine externe Einrichtung 140 angesteuert werden, die den Fahrer akustisch und/oder optisch über den Ausfall informiert. Es kann jedoch auch vorgesehen sein, dass der Fahrer erst dann informiert wird, wenn durch den Ausfall mehrere Pumpenelemente eine Druckversorgung der Bremsanlage bzw. des Bremskreises bei kritischen Fahrsituationen nicht mehr möglich ist. Darüber hinaus kann vorgesehen sein, dass der Zustand der 6-Kolbenpumpe, d.h. die Funktionsfähigkeit der Pumpenelemente bzw. der Ausfall von Pumpenelementen als Information in dem Speicher 160 abgelegt wird. Diese Information kann dann bei einem Werkstandaufenthalt bzw. bei einem regelmäßig stattfindenden Servicecheck abgefragt werden. Eine mögliche Realisation der Überwachungsvorrichtung 100 in Kombination mit dem Speicher 160 kann beispielsweise im Bremsensteuergerät 110 erfolgen.

Für die Beschreibung der Erfindung in einem konkreten Ausführungsbeispiel sei ein Bremskreis einer Bremsenanlage gewählt, der durch drei Kolben einer 6-Kolbenpumpe mit hydraulischer Bremsflüssigkeit versorgt wird. Der Taktzyklus bei der Erfassung der Druckgrößen soll 1 ms betragen. Insgesamt reichen im vorliegenden Ausführungsbeispiel 16 Messwerte aus, um eine ausreichende Aussage über die Funktionsfähigkeit der Pumpenelemente in der Mehrkolbenpumpe zu ermöglichen. Zur Verringerung des Rauschens wird jeweils der Mittelwert von 5 Messwerten verwendet. Damit ergibt sich eine Abtastrate von 5 ms. Diese 5 ms entsprechen einer Abtastfrequenz von 1/5 ms, d.h. 200 Hz. Nach dem Abtasttheorem ist die höchste abtastbare Frequenz somit 100 Hz (Nyquist-Frequenz). Die tiefste abtastbare Frequenz ergibt sich aus dem Zeitraster, d.h. der Anzahl der Messpunkte * der Abtastrate, bzw. 16*5 ms = 80 ms. Die untere Abtastfrequenz, d.h. die Grenzfrequenz, liegt damit bei 1/80 ms = 12,5 Hz. Diese 12,5 Hz bilden gleichzeitig das Frequenzraster der FFT. Um zu verhindern, dass durch Störungen irrtümlicherweise ein defektes Pumpenelement erkannt wird, wird der Abstand zwischen den einzelnen zu erwartenden Frequenzen erhöht. Dieser als Störabstand bezeichnete Abstand wird als optimale Pumpendrehzahl gewählt. Im vorliegenden Beispiel soll der Störabstand die doppelte Frequenz des Frequenzrasters der FFT aufweisen, d.h. 2*12,5 Hz = 25 Hz. Das entspricht für die Pumpendrehzahl 25*60 = 1500 min ⁻¹. Zusammen ergibt sich aus der unteren Abtastfrequenz und der optimalen Pumpendrehzahl, dass eine Messung bei einer Pumpendrehzahl von 1500 U/min 80 ms lang erfolgen sollte. Dies kann durch eine spezielle Testansteuerung oder sinnvoll integriert während einem sowieso zu erfolgenden Druckaufbau geschehen, beispielsweise indem die Überwachungseinheit die Pumpe 150 entsprechend ansteuert.

Bei den gewählten Parametern ergibt sich bei korrekt laufender Kolbenpumpe und ggfs. unter Abzug eines Grundrauschens ein Frequenzspektrum entsprechend Figur 2a. Dabei repräsentiert die x-Achse die Frequenz im Raster von 12,5 Hz und die y-Achse die Intensität des transformierten Signals. Die Frequenz 8 entspricht dabei der Nyquest-Frequenz von 100 Hz. Da die Frequenzen 9 bis 15 Spiegelungen der Frequenzen 1bis 7 darstellen, werden sie im Folgenden nicht weiter betrachtet. Frequenz 6 stellt im vorliegenden Ausführungsbeispiel die zu erwartende Frequenz bei einer Pumpenmotordrehzahl von 25 Hz dar, wenn alle 3 Pumpenelemente funktionieren. Bei Ausfall eines Pumpenelements verschwindet der Ausschlag auf Frequenz 6 (75 Hz) und es kommt zum Ausschlag auf Frequenz 4 (50 Hz). Kommt es darüber hinaus zu einem Ausfall eines weiteren Pumpenelements, so dass nur noch ein funktionierendes Pumpenelement vorhanden ist, so ist ein Ausschlag auf Frequenz 2 (25 Hz) zu finden.

Wird die Pumpendrehzahl exakt mit der Abtastfrequenz synchronisiert, so sind die Ausschläge in der Fast Fourier-Transformation am deutlichsten zu erkennen. Weicht die Pumpendrehzahl von der Abtastfrequenz ab, kommt es zu Ausschlägen auch auf benachbarten Frequenzen, wie in Figur 3 dargestellt. Trotz dieser zusätzlichen Ausschläge ist auf der zu erwartenden Grundfrequenz 6 ein deutlich höherer Ausschlag zu erwarten. Um eine fehlerhafte Erkennung eines defekten Pumpenelements zu verhindern, ist es vorteilhaft, den Störabstand ausreichend zu wählen.

Zur Realisation des FFT-Algorithmus mit der vorgeschlagenen Auswertung von 16 Messwerten kann auf die 16 Bit-Integer-Arithmetik zurückgegriffen werden. Somit ergibt sich bei 16 Messwerten aufgrund der notwendigen komplexen Berechnung ein Speicherbedarf von 16*2 = 64 Bytes. Diese 64 Bytes sind ausreichend, um die einzelnen Schritte der FFT zu berechnen. Zusätzlicher Speicher wird nicht benötigt. Somit ist es möglich, die FFT mit geringem Aufwand in schon vorhandenen Steuergeräten darzustellen.

Konkret sind bei 16 Messwerten 32 Rechenschritte (2-Wert-FFTs) notwendig. Jeder einzelne Rechenschritt umfasst dabei
- 4 16-Bit-Multiplikation/Division-Operationen
- 4 16-Bit-Additionen mit anschließendem Shift

Somit ergeben sich für die Berechnung unterschiedliche Möglichkeiten der Realisation:
- Berechnung der kompletten FFT mit 32 Rechenschritten in einem Rechenzyklus
- Aufteilung der FFT auf 4 Rechenzyklen mit je 8 Rechenschritten (die FFT dauert damit 4 Rechenzyklen)
- Aufteilung der FFT auf 32 Rechenzyklen mit je einem Rechenschritt (die FFT dauert damit 32 Rechenzyklen)

In einem weiteren Ausführungsbeispiel ist eine Abwandlung denkbar, bei der lediglich 8 Messwerte verwendet werden.

Herkömmliche FFT-Controller oder PC-Programme arbeiten mit einer hohen Abtastrate gegenüber den zu erwartenden Frequenzen. Somit wird eine Vielzahl von Messwerten aufgenommen, die mit entsprechender Rechenleistung verarbeitet werden müssen. Durch das kleine Frequenzraster der hohen Abtastfrequenz werden dagegen die Messfrequenzen mit hoher Genauigkeit getroffen. Durch geschickte Wahl des Verhältnisses zwischen Abtastfrequenz und den zu erwartenden Messfrequenzen kann man jedoch mit wenigen (16 oder nur 8) Messwerten auskommen. Notwendig ist dabei jedoch, dass die Messwerte möglichst genau mit der Abtastfrequenz synchronisiert werden. Wie in Figur 3 gezeigt kann es zu Ausschlägen bei benachbarten Frequenzen kommen, die bei guter Synchronisation nie einen Ausschlag liefern würden, wenn eine Abweichung zwischen der Abtastfrequenz und den zu erwartenden Frequenzen vorliegt. Wird die nächste zu erwartende Messfrequenz in ausreichendem Störabstand gesetzt, erfolgt bei dieser ein nur unwesentlicher Ausschlag. Somit kann sichergestellt sein, dass durch eine Abweichung nicht irrtümlich ein defektes Pumpenelement detektiert wird.

Anhand des Flussdiagramms in Figur 4 kann schematisch die Erkennung eines Defekts einer Mehrkolbenpumpe anhand eines Algorithmus dargestellt werden. Dieser Algorithmus kann für jeden Bremskreis getrennt aber auch für die Mehrkolbenpumpe als ganzem verwendet werden. Nach dem Start des Algorithmus bzw. Programms werden in Schritt 400 die Druckgrößen eingelesen. Dabei kann es sich um eine kontinuierliche Abfrage aber auch um eine getaktet Abfrage eines Druckerfassungsmittels handeln. Insgesamt kann so in einem weiteren Schritt 420 ein zeitlicher Druckverlauf der Mehrkolbenpumpe erfasst bzw. dargestellt werden. Dieser zeitliche Druckverlauf wird dann mittels einer Fast-Fourier-Transformation in den Frequenzraum transformiert, so dass ein Frequenzspektrum gemäß den Figuren 2a bis c bzw. 3 erzeugt wird. Im Schritt 440 kann dann erkannt werden, ob die Frequenzausschläge bei den entsprechenden Frequenzen auftreten. Werden ein oder mehrere defekte Pumpenelemente erkannt, so kann der Fahrer im Schritt 460 darüber informiert werden. Optional können bei der Entscheidung, ob der Fahrer informiert wird, auch weitere Informationen herangezogen werden. So ist beispielsweise denkbar, dass das Fahrverhalten des Fahrzeugs mit berücksichtigt wird, um zu entscheiden, ob die restlichen Pumpenelemente einen ausreichenden Bremsdruckaufbau erzeugen.

In einem weiteren Ausführungsbeispiel kann vorgesehen sein, dass die Abtastfrequenz in Abhängigkeit von der Pumpendrehzahl bzw. die Pumpendrehzahl in Abhängigkeit von der Abtastfrequenz gewählt wird. Dabei kann diese Abhängigkeit auf einen evtl. kurzen Erfassungszeitraum beschränkt werden, in dem die Mehrkolbenpumpe auf einen Defekt hin untersucht wird.

## Patentansprüche

1. Verfahren zur Überwachung einer Mehrkolbenpumpe, insbesondere in einer Bremsenanlage eines Fahrzeugs, wobei vorgesehen ist, dass zur Überwachung der von der Mehrkolbenpumpe erzeugte Druck erfasst wird,
**dadurch gekennzeichnet, dass**
in Abhängigkeit von einer Frequenzanalyse des zeitlichen Druckverlaufs ein Defekt der Mehrkolbenpumpe erkannt wird.

2. Verfahren nach Anspruch 1, **dadurch gekennzeichnet, dass** die Frequenzanalyse mittels einer Fast-Fourier-Transformation erfolgt.

3. Verfahren nach Anspruch 1, **dadurch gekennzeichnet, dass** durch die Frequenzanalyse der Ausfall eines Kolbens der Mehrkolbenpumpe erkannt wird.

4. Verfahren nach Anspruch 1, **dadurch gekennzeichnet, dass** zur Frequenzanalyse ein zeitlicher Mittelwert des Druckverlaufs verwendet wird.

5. Verfahren nach Anspruch 1, **dadurch gekennzeichnet, dass** der zeitliche Verlauf des von der Mehrkolbenpumpe erzeugten Drucks mittels diskreter Druckgrößen erfasst wird, wobei insbesondere vorgesehen ist, dass die diskreten Druckgrößen mittels eines Druckerfassungsmittels erfasst werden.

6. Vorrichtung zur Überwachung einer Mehrkolbenpumpe, insbesondere in einer Bremsenanlage eines Fahrzeugs, wobei Druckerfassungsmittel (120) zur Erfassung des von der Mehrkolbenpumpe erzeugten Drucks vorgesehen sind,
**dadurch gekennzeichnet, dass**
ein Überwachungsmittel (100) vorgesehen ist, das in Abhängigkeit von einer Frequenzanalyse des zeitlichen Druckverlaufs einen Defekt der Mehrkolbenpumpe erkennt.

7. Vorrichtung nach Anspruch 6, **dadurch gekennzeichnet, dass** das Überwachungsmittel eine Fast-Fourier-Transformation zur Frequenzanalyse des zeitlichen Druckverlaufs durchführt.

8. Vorrichtung nach Anspruch 6, **dadurch gekennzeichnet, dass** das Überwachungsmittel mittels der Frequenzanalyse einen Ausfall eines Kolbens der Mehrkolbenpumpe erkennt.

9. Vorrichtung nach Anspruch 6, **dadurch gekennzeichnet, dass** das Überwachungsmittel einen zeitlichen Mittelwert des Druckverlaufs für die Frequenzanalyse verwendet.

10. Vorrichtung nach Anspruch 6, **dadurch gekennzeichnet, dass** das Überwachungsmittel den zeitlichen Verlauf des von der Mehrkolbenpumpe erzeugten Drucks mittels diskreter Druckgrößen erfasst, wobei insbesondere als Druckerfassungsmittel wenigstens eine Drucksensor vorgesehen ist.
